# EUROPEAN PATENT APPLICATION

(11) **EP 4 613 642 A1**
(43) Date of publication of application: **10.09.2025**
(21) Application number: 24162383.4
(22) Date of filing: 08.03.2024
(51) Int. Cl.: B64C 9/22, B64C 9/02, B64C 9/24

(54) **WING FOR AN AIRCRAFT AND METHOD FOR CONNECTING A CONNECTION ASSEMBLY**

(71) Applicant: Airbus Operations GmbH, 21129 Hamburg (DE)
(72) Inventor: Haunert, Jan, 21129 Hamburg (DE); Schlipf, Bernhard, 21129 Hamburg (DE)

(57) **Abstract**

Described is a wing (3) for an aircraft (1), a method for connecting a connection assembly (209) to a wing (3) for an aircraft (1), and an aircraft comprising said wing (3). The wing (3) for an aircraft (1), comprises a main wing (5) and a high lift assembly. The high lift assembly comprises a high lift body (212) comprising a high lift structure and a connection assembly (209) movably connecting the high lift body (212) to the main wing (5), such that the high lift body is movable between a retracted position and at least one extended position. The connection assembly (209) comprising a first connection element (222) and a second connection element (224), the connection assembly (209) is mounted to the main wing (5) by a mounting arrangement (214), the mounting arrangement (214) comprises a first mounting profile (234) and a second mounting profile (236), and the connection assembly (209) comprises a connection structure (250), the connection structure (250) defining the first and second connection elements (222, 224). Further, the mounting arrangement (214) is at least partially defined by a support structure of the main wing (5), and the first and second connection elements (222, 224) are located on the connection structure (250) so as to be configurable to be aligned with and connected to the first and second mounting profiles (234, 236) of the mounting arrangement (214) and located so as to maximise a dimension between the connection elements defined by the connection assembly (209).

## Description

The present disclosure relates to a wing for an aircraft and to a method for connecting a connection assembly to the wing of an aircraft, as well as to an aircraft comprising the described wing.

The described wing for an aircraft comprises a main wing and a high lift assembly, the high lift assembly comprising a high lift body and a connection assembly movably connecting the high lift body to the main wing such that the high lift body is movable between a retracted position and at least one extended position (e.g. movable relative to the main wing). The high lift body may be or comprise a leading edge slat or a trailing edge flap of a wing for an aircraft. The slat track may comprise a slat track axis extending along the length thereof, such that the slat track is movable along the slat track axis via the roller bearing. The high lift body may be or comprise a leading edge slat or a trailing edge flap of a wing for an aircraft.

The connection assembly comprises a first connection element and a second connection element, and is mounted to the main wing by a mounting arrangement. The mounting arrangement comprises a first mounting profile and a second mounting profile. The connection assembly comprises a connection structure that defines the first and second connection elements. In some examples, the connection structure may comprise or define a connection surface or plurality of surfaces on which the first and second connection elements are located. The connection structure may be the structure on which it is possible to locate or define the first and second connection elements, for example depending on the width or diameter of the first and second connection elements, the strength of the material of the connection structure and an applicable safety factor, it may be necessary to locate or define the first and second connection elements a minimum distance from an edge of the connection structure, and therefore the connection structure may permit location or definition of the first and second elements thereon, provided that said first and second components are disposed e.g. a minimum distance from the edge of the connection structure, away from support ribs, positioned so as not to provide unwanted stress concentrations, or the like.

Wings for aircraft generally have connection assemblies that movably connect a high lift body to the main wing, for example so as to allow the high lift body to move between an extended and a retracted position. The connection assembly in the wing of an aircraft may be supported by the wing box of the aircraft, and connected to the wing box via an interface. The wing box provides structural support to the wing of the aircraft, and often comprises or defines a rib structure at the forward leading edge of the wing externally of the wing box itself, which may be used to carry leading edge devices such as slats, which may be operated and supported via a connection assembly.

The connection assembly may usually be assembled with the wing box of the wing for an aircraft. During normal assembly, the connection assembly is connected to the wing box via some sort of mounting arrangement, resulting in a connection interface between the mounting arrangement and the connection assembly. Usually, the connection assembly is assembled at the same time as the wing box of the aircraft. Assembling the wing box with the connection assembly may be a complex process, during which a connection interface is established between the mounting arrangement and the connection assembly. The interface must be strong enough to withstand the large forces that are incident on the connection assembly via the high lift body.

It is desirable to modularise the process of constructing an aircraft, for example to improve efficiency in the process of constructing the aircraft and/or to automate some steps involved in the construction of an aircraft. Modularisation can also have the advantage that repair and replacement of parts is easier, as individual parts (e.g. modules) of the aircraft may be taken from the aircraft, and replaced with an identical module that does not need any replacement work, as well as permitting smaller modules to be assembled quickly and easily by a single worker, or a small number of workers. This would then allow the part that needs repair to be repaired on the ground without the rest of the aircraft also having to remain grounded with it, this greatly reducing the grounding times of the aircraft. However, modularising the process of constructing an aircraft means, in the case of the connection interface between the connection assembly and the mounting arrangement, that it may not be possible to establish the same connection between the main wing and the connection assembly, for example due to no longer being able to access the interior of the main wing (e.g. of the wing box).

Therefore, it is an object of the present invention to provide a wing assembly and a method for connecting a connection assembly to a main wing that enables a connection assembly to be attached to the main wing and to be sufficiently supported to withstand the large forces that are incident of the connection assembly via the high lift body.

The object of the invention is realised in that the mounting arrangement is at least partially defined by a support structure of the main wing, for example a preassembled main wing.

Further, the support structure may be a rib structure, a bracket, a flange, or the like, that protrudes from the main wing, for example in the direction towards the leading edge of the wing. In addition, the first and second connection elements are located on the connection structure so as to be configurable to be aligned with and connected to the first and second mounting profiles of the mounting arrangement and located so as to maximise a dimension between the connection elements defined by the connection assembly. The alignment of the first and second connection elements may be the same as that of the first and second mounting profiles, e.g. the spacing of the connection elements on the connection structure may be the same relative to the spacing on of the mounting profiles on the support structure. The first and second connection elements may be considered to have a "staggered" configuration, as may the first and second mounting profiles, since they may not comprise a traditional alignment. The wing is therefore able to comprise a main wing to which a high lift body is able to be attached, whereby the distance between the connection elements on the connection assembly is maximised so as to reduce the forces (e.g. transmitted to the interface between the connection assembly and the mounting arrangement from forces on the high lift body) on the connection assembly (e.g. the connection stucture of the connection assembly) for example by increasing the length of the lever arm between the connection elements, thereby increasing the ability of the connection assembly to withstand high forces transmitted from the high lift body.

The connection structure may be in the form of, or may comprise, a cassette housing. A cassette housing may be a solid-block style housing, for example contained in a rectangular block, which may have openings therein, for example for drive members, track members, or the like.

The first connection element may be connected to the first mounting profile by an elongate connector. The elongate connector may be a bolt, a screw, or the like. The elongate connector may extend through the entire width of the connection assembly (e.g. through the entire width of connection structure of the connection assembly). The elongate connector may extend through the connection assembly, e.g. through a surface or structure of the connection structure, such that the elongate connector is able to connect to (or engage with) a first mounting arrangement on one end thereof, and a second mounting arrangement on the other end thereof (e.g. a second mounting arrangement on the other side of the connection assembly). The connection structure may comprise at least one bore (which may be a threaded bore) extending through the length of the structure, or may comprise at least two bores (e.g. threaded bores) which may be located in the connection structure on each end thereof. Such a configuration, whereby a single elongate member defines or comprises a first and a second connection element (e.g. on each end thereof) may provide a better and stronger connection to the mounting arrangement, and therefore may improve the security of the connection between the connection assembly and the main wing.

Alternatively, the elongate connector may connect to a blind bore (which may be a threaded bore) in the connection element, for example on the surface of the connection structure or defined by the connection structure. As the name suggests, the blind bore may not extend all the way through the connection assembly, but may terminate in a closed end. The closed end may be aligned with a surface of the connection structure, for example, such as an exterior or exterior facing surface of the connection stucture. The connection element may therefore extend partially through the width of the connection assembly (e.g. the connection structure of the connection assembly), or alternatively the blind bore may be formed on the surface of the connection structure (e.g. by a sleeve of material protruding from the connection structure) such that the elongate connector does not extend through the connection structure itself. Such a configuration of elongate connectors may ensure that the elongate connector does not interfere with the components within the connection assembly (e.g. the connection structure of the connection assembly).

The elongate connector may extend through at least one or both of the first mounting profile and the first connection element, or the second mounting profile and second connection element. Therefore, one or both of the first and second connection elements and one or both of the first and second mounting profiles may comprise or define a bore therein, where the bores of the first connection element and the first mounting profile, and the bore of the second connection element and the second mounting profile may be aligned (e.g. such that a central axis of each bore is aligned) so as to permit connection between the mounting arrangement and the connection element.

The connection assembly may comprise a third and a fourth connection element and the mounting arrangement may comprise a third and a fourth mounting profile. The third and fourth connection element may be located on an opposite lateral side of the connection structure. The third and fourth connection element maybe located on the connection structure and laterally offset along the span-wise axis of the wing. The relative position of the third and fourth connection elements on the support structure may be a mirror image of that of the first and second connection element, as may also be the case with the third and fourth mounting profiles.

The first and second mounting profile may be located on a first structure of the mounting arrangement, and the third and fourth mounting profiles may be located on a second structure of the mounting arrangement, where both the first and second structures of the mounting arrangement may be part of the fixed leading edge of the wing, and/or may be ribs protruding from the main wing, or the wing box thereof.

The third and fourth connection elements may connect to the third and fourth mounting profile analogous to how the first and second connection elements connect to the first and second mounting profiles (e.g. via a connection member).

Each of the first and second connection elements may define a support sleeve that extends from the connection structure towards the mounting arrangement and may comprise a central bore, and each of the first and second mounting profiles may define a support sleeve that may extend from the mounting arrangement towards the connection assembly and may comprise a central bore. The central bore of the first connection element may be aligned with the central bore of the first mounting profile and the respective support sleeves thereof may be in contact at a distal portion thereof. The central bore of the second connection element may be aligned with the central bore of the second mounting profile and the respective support sleeves thereof may be in contact at a distal portion thereof. As such, a continuous sleeve of material may be established between the first connection element (e.g. the support sleeve thereof) in contact with the first mounting arrangement, as well as with the second connection element and the second mounting arrangement. Said continuous sleeve of material may have an additional supporting effect on an elongate member positioned therein, thereby providing additional resistance to forces produced on the high lift body and transferred to the interface between the connection assembly and the main wing.

The dimension between the first and second connection elements may be maximised in the vertical dimension (e.g. only the vertical direction). Alternatively, the dimension between the first and second connection elements may be maximised in the horizontal direction, or both the horizontal and vertical location, such that the connection elements have the appearance of being diagonally oriented relative to one another.

The connection assembly may comprise an elongated slat track that is moveable along a slat track axis, and when viewed from a plane that is perpendicular to the span-wise direction of the wing, one of the connection elements is located above the slat track axis, and one is located below the slat track axis.

The connection assembly may comprise a curved slat track that has a curved range of motion along a curved axis having a radius of curvature. When viewed from a plane that is parallel to a plane in which the curved range of motion lies, one of the connection elements may be located to one side of the radius of curvature, and the other of the connection elements may be located on the other side of the radius of curvature. As such, one connection element may be located relatively above the radius of curvature, while the other may be located relatively below the radius of curvature. Therefore, forces that are transmitted through the slat track may act in opposite directions on each connection element, thereby taking advantage of the increased lever arm between the first and second connection elements.

The mounting arrangement may be defined by at least one flange protruding from the main wing (e.g. from the wing box). The mounting arrangement may be defined by a first and a second flange protruding from the main wing. The flange may be in the form of a rib, fixed leading edge, or other support structure.

The first connection element and first mounting profile may be located proximal to the main wing, and the second connection element and second mounting profile may be located distal to the main wing. (e.g. to the wing box of the main wing, in the direction of motion of the wing during operation or the direction perpendicular to the leading edge of the wing) Such a positioning of the connection profiles may increase the distance therebetween, and reduce the forces acting on each of the first and second connection elements.

The mounting arrangement may comprise exactly two mounting profiles and the connection assembly may comprise exactly two connection elements.

A second aspect relates to a method of connecting a connection assembly to a wing for an aircraft according to the preceding aspect, comprising preassembling the main wing of the wing for an aircraft, aligning the first connection element (e.g. a central axis thereof, such as the central axis of a bore in the first connection element) with the first mounting profile (e.g. a central axis thereof, such as the central axis of a bore in the first mounting profile) and the second connection element (e.g. an axis thereof) with the second mounting profile (e.g. an axis thereof), connecting the first connection element with the first mounting profile and the second connection element with the second mounting profile.

The method may comprise preassembling the main wing before aligning the first and second connection elements with the respective first and second mounting profiles.

A further aspect relates to an aircraft comprising a wing according to the first aspect.
- Figure 1: is a perspective view of an aircraft, showing a wing of the aircraft;
- Figure 2: is a schematic view of a connection assembly in an aircraft;
- Figure 3: is a schematic view of a connection assembly cassette;
- Figures 4A-B: provide views of a connection assembly cassette mounted to an aircraft wing;
- Figures 5A-C: show schematic illustrations of a cross-section of a wing of an aircraft;
- Figures 6A-E: are perspective views of a connection assembly connected to a wing.

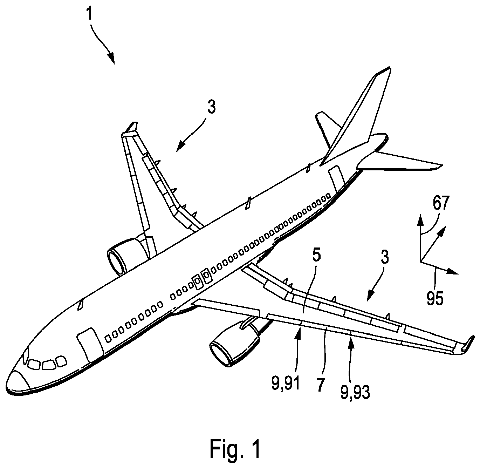

In Fig. 1 an aircraft 1 according to an embodiment of the present invention is illustrated. The aircraft 1 comprises a wing 3 that is formed according to an embodiment of the present invention.

As shown in Fig. 1, the connection assembly 9 relates to a first connection assembly 91, and the wing 3 comprises a second connection assembly 93 connecting the slat 7 to the main wing 5 in a position spaced apart from the first connection assembly 91 in a wing span direction 95, and wherein the second connection assembly 93 is formed as the first connection assembly 91. Additionally illustrated in Fig. 1 is a wing thickness direction 67. While, in Fig. 1, the connection assembly 9 is illustrated as connecting slat 7 to the main wing 5, it should also be understood that the connection assembly 9 may be used to connect a trailing edge flap 2 to the wing 5 of an aircraft.

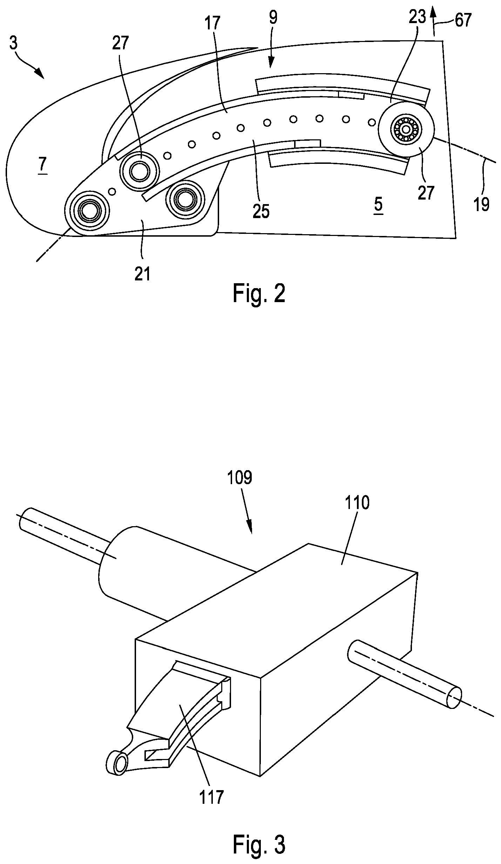

Fig. 2 shows an example of a connection assembly 9 of a wing for an aircraft, which is configured to connect a slat to the main wing of an aircraft. The connection assembly 9 may be used in combination with a wing 1 similar to that as described in Fig. 1, where the wing 1 comprises a main wing 5, a slat 7, and a connection assembly 9 (according to the present disclosure) movably connecting the slat 7 to the main wing 5, such that the slat 7 is movable between a retracted position and at least one extended position.

In Figure 2, the connection assembly 9 comprises a slat track 17 that extends along a track longitudinal axis 19 between a front end 21 and a rear end 23. The front end 21 of the slat track 17 is fixedly mounted to the slat 7. The rear end 23 and the intermediate portion 25 of the slat track 17 are movably mounted to the main wing 5 by a roller bearing 27 such that the slat track 17 is movable along the track longitudinal axis 19.

An alternative connection assembly 109 is illustrated in Figure 3, this time in the form of a connection assembly cassette. Here, the slat track 117 is partially located inside a cassette housing 110, and the roller bearing on which the slat track 117 is located completely in the housing 110. In order to move the slat track 117 between an extended and a retracted position, an actuator or actuators are provided that penetrate the cassette housing 110 and permit movement of the slat track 117.

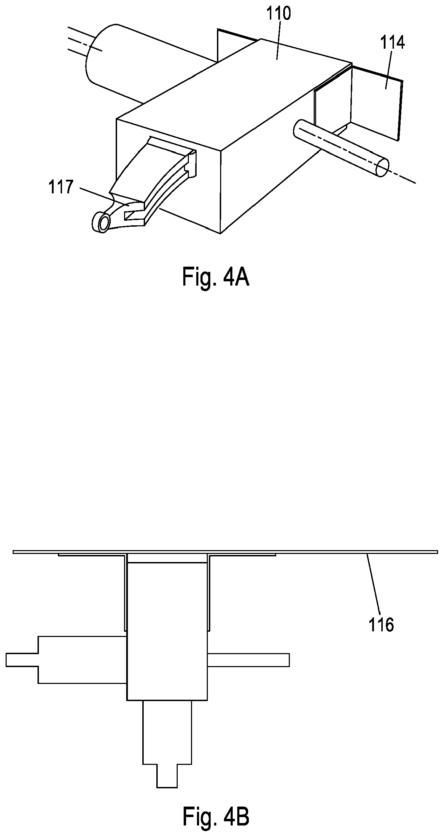

In both the case of the connection assembly 9, 109 having an "open" construction as shown in Figure 2, or a "cassette" construction as is shown in Figure 3, the connection assembly may be mounted to the main wing of an aircraft via a mounting arrangement. One example of a mounting arrangement 114 is illustrated in Figure 4A. Here, a cassette housing 110 is mounted to a main wing 116 of an aircraft via the mounting arrangement 114. The mounting arrangement 114 is in the form of a bracket, which comprises a number of locations at which the bracket is connected to the cassette 110, for example via a known connector. In this example, the main wing 116 (and in particular the wing box of the main wing) has been constructed at the same time as the cassette 110 was mounted thereon. This has the effect of permitting the orientation of the cassette 110 relative to the main wing 116 to be adapted such that the slat track 117 is at the desired angle relative to the main wing 116. The exact orientation required by the connection assembly 9, 109 relative to the main wing may change slightly depending on the exact connection assembly 9, 109, for example due to manufacturing tolerances during the production of the aircraft wing, the main wing (including the wing box) and/or the connection assembly itself. Therefore, at present it is important to ensure that the connection assembly 9, 109 is adequately oriented relative to the main wing 116 during production thereof.

While the desire to modularise the production of an aircraft provides advantages in terms of more efficient production, as well as improved processes for the repair and replacement of aircraft parts, it has the effect that some parts that have been preassembled, or that have been assembled in an earlier step of the modular construction process, may only be externally accessible. Therefore, interior parts that may have been accessible via non-modular production are no longer accessible. Therefore, known methods and structures for attaching one component to another (e.g. a connection assembly to a main wing) may no longer be applicable.

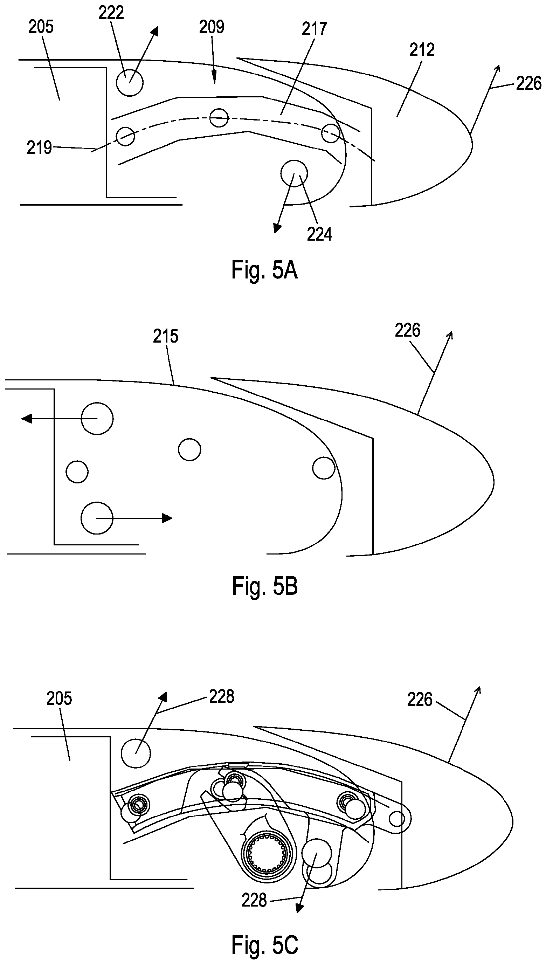

Figures 5A to 5C illustrate schematically a cross-section of a high lift body 212 connected to a main wing 205 of an aircraft 1 (see Figure 1). Here, the high lift body 212 is in the form of a slat (although it may be possible that the high lift body may be a flap) and is connected to a connection assembly 209 via a slat track 217. The slat track 217 is moveable via a plurality of roller along a curved slat track axis 217, so as to move the high lift body 212 away from and towards the main wing 205.

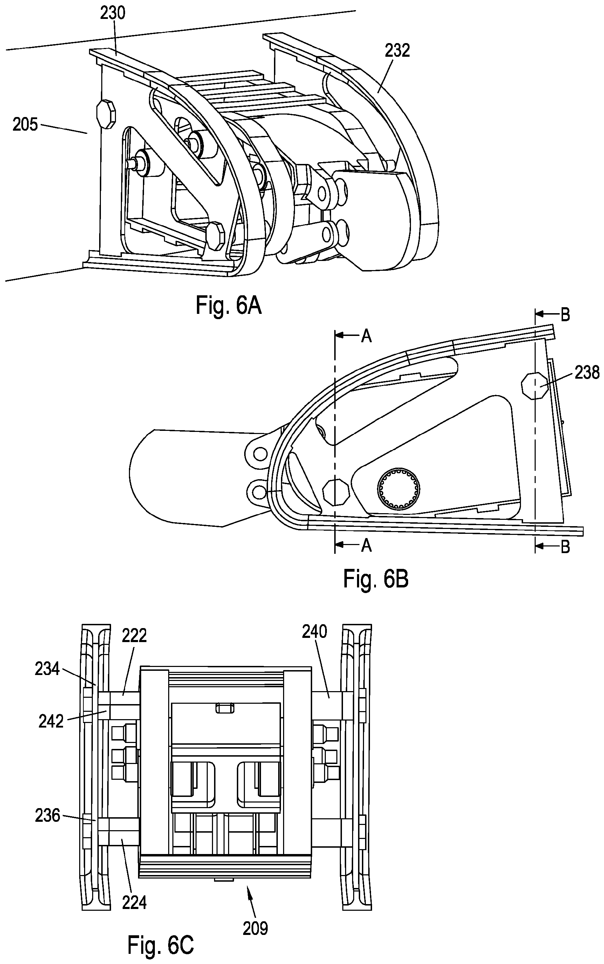

In addition to the connection assembly 209 comprising a slat track 217, the connection assembly 209 additionally comprises a connection structure 250 and first and second connection elements 222, 224 which are attached to mounting profiles (see Figures 6A-E) located on the main wing 205. The connection elements 222, 224 connect the main wing 205 to the connection assembly 209, so as to prevent movement between the main wing 205 and the connection assembly 209. As such, a force that acts on the high lift body 212, illustrated in Figures 5A to 5C by arrow 226 will be transferred to the main wing 205 through the connection assembly 209 and the connection element 222, 224. Forces acting on each of the connection elements are also illustrated by arrows 228. As can be seen, the forces are, in each case, oppositely directed between the first connection element 222 and the second connection element 224.

In the case of Figures 5A and 5C, the first and second connection elements 222, 224 are located so as to maximise the vertical and horizontal distance therebetween, while in Figure 5B, the first and second connection elements 222, 224 are located so as to maximise only the vertical distance therebetween. In each case, the location of the first and second connection elements 222, 224 may have an effect on the direction of the forces acting on the first and second connection elements 222, 224. It should also be noted that, in each case, the first connection element 222 is located above the axis 219 that defines the curved range of motion of the slat track 217 (e.g. the radius of curvature of the axis 219), while the second connection element 224 is located below the curved axis 219 (according to the view in Figures 5A to 5C, which from a plane parallel to the plane in which the curved curved axis 219 is located - in this case, the plane of the page).

Perspective views of the connection assembly and part of the main wing are shown in Figures 6A to 6E. Here, the connection assembly 209 has a connection structure 250 that is in the form of two rib-shaped structures 215 that are separated along the wing-span direction and connected together by support elements(as opposed to a cassette style housing as shown in Figures 4A and 4B). For the purposes of this illustration the connection assembly 209 (connection structure 250) is generally prismatic in shape, and in particular is in the shape of a polygonal (or rib-shaped prism), although it should be noted that this illustration is a simplified version of the connection assembly 209 as would be installed in the wing of an aircraft. The connection structure 250 here is in the shape of an extruded leading edge. Also illustrated are two flanges 230, 232 (e.g. a first and a second flange) that are protruding from the main wing 205. The flanges may be a rib structure of the wing, may be part of the fixed leading edge, or the like. The flanges 230, 232 each comprise a mounting arrangement thereon, the mounting arrangement comprising a first mounting profile 234 and a second mounting profile 236. Here, the first and second mounting profiles simply form an aperture in the flanges 230, 232 through which an elongate member 238 is able to be positioned. The elongate member 238 is then able to engage with a connection element 222, 224, for example by a threaded connection, chemical bonding, or the like. In cases where there are two flanges (230, 232) such as the case described, it may be considered that the connection assembly 209 comprises a first and second connection element 222, 224 located on one side thereof, and a third and fourth connection element 222a, 224a located on an opposite axial side thereof. The third and fourth connection elements 222a, 224a may then connect to a corresponding third and fourth mounting profile defined in the second flange 232.

Each of the flanges 230, 232 may be attached to the main wing 205, and in particular to the wing box of the main wing 205. The flanges 230, 232 may be in the form of ribs that protrude from the wing box, may be a fixed leading edge, or the like. Therefore there may be no need to include additional brackets or mounts to attach the connection assembly 209 to the main wing 205.

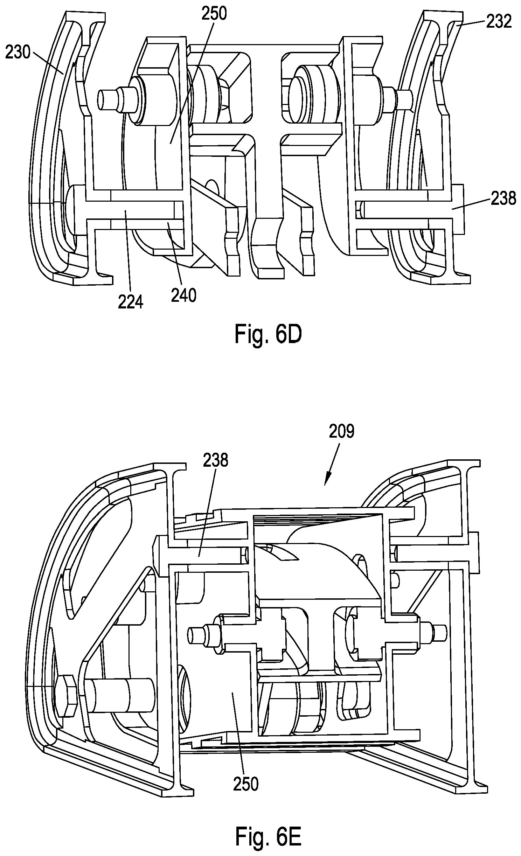

In Figures 6D and 6E, it is able to be seen that the connection elements 222, 224 each comprise a sleeve 240 which extends from a connection structure 250 (e.g. a surface of the connection structure, such as a strut, support member or the like) towards the adjacent flange 230, 232, while the flanges 230, 232 comprise a sleeve that is located around (e.g. surrounds) the mounting profile and extends towards the connection structure 250 of the connection assembly 209. The connection structure 250 is parallel to the adjacent flange 230, 232 in this example, and the connection assembly 209 comprises a connection structure 250 on each lateral side thereof that is located adjacent a flange 230, 232.

Each of the sleeves 240, 242 comprises a central bore, and the central bore of the sleeve 240 of the first connection element 222 is aligned with the central bore of the sleeve 242 of the first mounting profile 242, while the central bore of the sleeve of the second connection element 222 is aligned with the central bore of the sleeve 242 of the second mounting profile 242. The distal end of the sleeve 240 of the connection element contacts (e.g. abuts) the distal end of the sleeve 242 of the mounting profile, and an elongate connection member is positioned in the bore defined by the sleeves to connect the connection assembly 209 to the main wing 205.

Although not illustrated, examples whereby the connection member extends through the connection structure are also conceivable, as are examples whereby a single connection member extends through the entire connection structure 250.

## Claims

1. A wing (3) for an aircraft (1), comprising:
a main wing (5); and
a high lift assembly comprising:
a high lift body (212) comprising a high lift structure; and
a connection assembly (209) movably connecting the high lift body (212) to the main wing (5), such that the high lift body (212) is movable between a retracted position and at least one extended position,
the connection assembly (209) comprising a first connection element (222) and a second connection element (224);
the connection assembly (209) being mounted to the main wing (5) by a mounting arrangement (214), the mounting arrangement (214) comprising a first mounting profile (234) and a second mounting profile (236);
the connection assembly (209) comprising a connection structure (250) defining the first and second connection elements (222, 224);
**characterized in that**
the mounting arrangement (214) is at least partially defined by a support structure of the main wing (5), and the first and second connection elements (222, 224) are located on the connection structure (250) so as to be configurable to be aligned with and connected to the first and second mounting profiles (234, 236) of the mounting arrangement (214) and located so as to maximise a dimension between the connection elements defined by the connection assembly (209).

2. The wing (3) for an aircraft (1) according to claim 1, wherein connection structure (250) is in the form of a cassette housing (110).

3. The wing (3) for an aircraft (1) according to any preceding claim, wherein the first connection element (222) is connected to the first mounting profile (234) by an elongate connector.

4. The wing (3) for an aircraft (1) according to claim 3, wherein the elongate connector extends through the entire width of the connection assembly (209).

5. The wing (3) for an aircraft (1) according to claim 3, wherein the elongate connector connects to a blind bore in the connection element (222, 224) on the surface of the connection structure.

6. The wing (3) for an aircraft (1) according to any preceding claim, wherein the connection assembly (209) comprises a third and a fourth connection element (222, 224) and the mounting arrangement (214) comprises a third and a fourth mounting profile (234, 236), wherein the third and fourth connection element (222, 224) are located on an opposite lateral side of the connection structure (250).

7. The wing (3) for an aircraft (1) according to claim 6, wherein the first and second mounting profile (234, 236) are located on a first structure of the mounting arrangement (214), and the third and fourth mounting profile (234, 236) are located on a second structure of the mounting arrangement (214), where both the first and second structures of the mounting arrangement (214) are part of the fixed leading edge of the wing (3).

8. The wing (3) for an aircraft (1) according to any preceding claim, wherein each of the first and second connection elements (222, 224) define a support sleeve (240, 242) that extends from the connection structure (250) towards the mounting arrangement (214) and comprises a central bore, and each of the first and second mounting profiles (234, 236) defines a support sleeve (240, 242) that extends from the mounting arrangement (214) towards the connection assembly (209) and comprises a central bore, wherein the central bore of the first connection element (222) is aligned with the central bore of the first mounting profile (234) and the respective support sleeves (240, 242) thereof are in contact at a distal portion thereof, and wherein the central bore of the second connection element (224) is aligned with the central bore of the second mounting profile (236) and the respective support sleeves (240, 242) thereof are in contact at a distal portion thereof.

9. The wing (3) for an aircraft (1) according to any preceding claim, wherein the dimension between the first and second connection elements (222, 224) is maximised in the vertical dimension.

10. The wing (3) for an aircraft according to any preceding claim, wherein the connection assembly (209) comprises an elongated slat track (217) that is moveable along a slat track axis (219), and when viewed from a plane that is perpendicular to the span-wise direction of the wing, one of the connection element (222, 224) is located above the slat track axis (219), and one is located below the slat track axis.

11. The wing (3) for an aircraft (1) according to any preceding claim, wherein the connection assembly (209) comprises a curved slat track (217) that is moveable along a curved axis (219) defining a radius of curvature, and when viewed from a plane that is parallel to a plane in which the curved axis (219) lies, one of the connection elements (222, 224) is located to one side of the radius of curvature, and the other of the connection elements is located on the other side of the radius of curvature.

12. The wing (3) for an aircraft (1) according to any preceding claim, wherein the mounting arrangement (214) is defined by at least one flange (230, 232) protruding from the main wing (5).

13. The wing (3) for an aircraft (1) according to any preceding claim, wherein the first connection element (222) and first mounting profile (234) are located proximal to the main wing (5), and the second connection element (224) and second mounting profile (236) are located distal to the main wing (5).

14. A method of connecting a connection assembly (209) to a wing (3) for an aircraft (1) according to any of claims 1 to 13, comprising:
preassembling the main wing (5) of the wing (3) for an aircraft (1);
aligning the first connection element (222) (e.g. an axis thereof) with the first mounting profile (234) and the second connection element (224) with the second mounting profile (236), where the first mounting profile and the second mounting profile (234, 236) are defined by a support structure of the main wing (5);
connecting the first connection element (222) with the first mounting profile (234) and
the second connection element (224) with the second mounting profile (236).

15. An aircraft (1) comprising a wing (3) according to any of the claims 1 to 13.
